# EUROPEAN PATENT SPECIFICATION

(11) **EP 2 600 228 B1**
(45) Date of publication and mention of the grant of the patent: **13.06.2018**
(21) Application number: 11812336.3
(22) Date of filing: 20.07.2011
(51) Int. Cl.: G06F 3/01, G06F 3/041, G06F 3/044

(54) **INPUT DEVICE, DISPLAY DEVICE AND MACHINE**
EINGABEVORRICHTUNG, ANZEIGEVORRICHTUNG UND MASCHINE DAMIT
DISPOSITIF D'ENTRÉE, DISPOSITIF D'AFFICHAGE ET MACHINE

(30) Priority: 21.12.2010 JP 2010284735; 29.07.2010 JP 2010170733
(43) Date of publication of application: 05.06.2013
(73) Proprietor: Kyocera Corporation, Kyoto-shi, Kyoto 612-8501 (JP)
(72) Inventor: NAGATA, Yasunari, Fushimi-ku, Kyoto-shi Kyoto 612-8501 (JP); YOKOYAMA,Ryoichi, Fushimi-ku, Kyoto-shi Kyoto 612-8501 (JP)
(74) Representative: Viering, Jentschura & Partner mbB Patent- und Rechtsanwälte
(86) International application number: PCT/JP2011/066443
(87) International publication number: WO 2012/014745

(56) References cited:
- WO-A1-2009/147741
- US-A1- 2003 067 449
- US-A1- 2003 231 170
- US-A1- 2011 141 046

## Description

### TECHNICAL FIELD

The present invention relates to an input device, display device and machine.

### BACKGROUND ART

Recently, there is a known touch sensation transfer technology that transmits various senses of touch such as a sense of pressing, a sense of tracing, and a tactile sense to a user operating an input device when the user operates the input device (for example, see Patent Literature 1). Herein, examples of the input device include a capacitance-type touch panel.

The capacitance-type touch panel detects an input position by perceiving a change in capacitance between a finger and a detector electrode. When the touch sensation transfer technology is applied to the capacitance-type touch panel, it is necessary to attach an oscillating body including an electrode terminal to a substrate provided with the detecting electrode. However, depending on positions where the oscillating body is attached to the substrate, a detection sensitivity of an input position may be reduced in the input device due to a stray capacitance generated between the electrode terminal of the oscillating body and the detecting electrode of the substrate.
Patent Literature 1: Japanese Patent Application Laid-open No. 2004-118754

US 2003/231170 A1 discloses a digitizing tablet which comprises an operation panel having an input surface and a rear surface, a support substrate under said rear surface of said operation panel, and a pair of drive electrodes fixed to front and rear surfaces of an expandable piezoelectric substrate that is fixed to said operation panel or said support substrate. US 2003/067449 A1 discloses a touch panel input device.

### SUMMARY OF THE INVENTION

The invention relates to an input device, a display device, and a machine capable of reducing a possibility that a detection sensitivity of an input position decreases.

The present invention provides an input device according to claim 1, a display device according to claim 8, and a machine according to claim 9.

Further advantageous embodiments of the present invention are disclosed in the dependent claims.

### BRIEF DESCRIPTION OF DRAWINGS

FIG. 1 is a plan view illustrating a schematic configuration of an input device according to an embodiment.
FIG. 2 is a cross-sectional view taken along the cutting plane line I-I illustrated in FIG. 1.
FIG. 3 is a cross-sectional view taken along the cutting plane line II-II illustrated in FIG. 1.
FIG. 4 is a cross-sectional view taken along the cutting plane line III-III illustrated in FIG. 1.
FIG. 5 is a perspective view illustrating an appearance of an oscillating body.
FIG. 6 is a cross-sectional view taken along the cutting plane line IV-IV illustrated in FIG. 5.
FIG. 7 is a diagram illustrating another example of the input device, and is a cross-sectional view illustrating the same portion as that of FIG. 4.
FIG. 8 is a flowchart illustrating an operation example of the input device.
FIG. 9 is a cross-sectional view illustrating a schematic configuration of a display device according to an embodiment.
FIG. 10 is a perspective view illustrating a schematic configuration of a mobile terminal according to an embodiment.
FIG. 11 is a cross-sectional view illustrating a schematic configuration of an input device according to Modification 1.
FIG. 12 is a cross-sectional view illustrating a schematic configuration of an input device according to Modification 2.
FIG. 13 is a cross-sectional view illustrating a schematic configuration of an input device according to Modification 3.

### MODE(S) FOR CARRYING OUT THE INVENTION

Hereinafter, an embodiment of the invention will be described with reference to drawings.

However, each drawing referred to below illustrates simplified substantial elements necessary to describe the invention among elements of an embodiment of the invention for convenience of description. Accordingly, an input device, a display device, and a machine according to the invention may include an arbitrary element that is not illustrated in each drawing referred to by this specification.

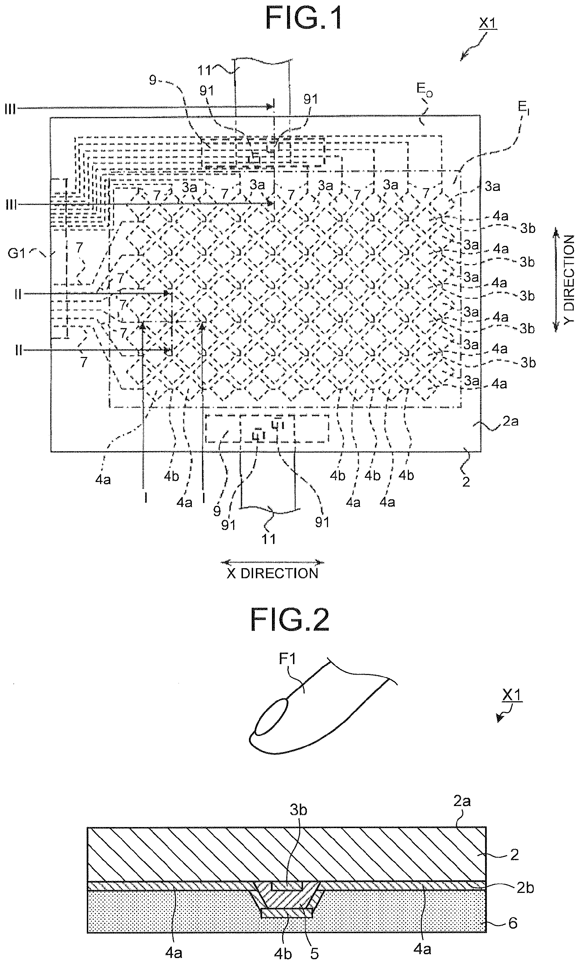

As illustrated in FIG. 1, an input device X1 according to an embodiment is a capacitance-type touch panel, and includes: an input region E_{I} where information may be input by an operation of a user using a finger; and an outer region E_{O} positioned on an outside of the input region E_{I}.

In addition, as illustrated in FIGS. 1 to 4, the input device X1 includes a substrate 2.

The substrate 2 is a member that has a role of supporting first detecting electrodes 3a, first connection electrodes 3b, second detecting electrodes 4a, and second connection electrodes 4b to be described below in the input region E_{I}, and has a role of supporting a detecting electrode wiring 7 to be described below in the outer region E_{O}. The substrate 2 includes an operation face 2a and a back face 2b positioned opposite the operation face 2a. That is, the operation face 2a of the substrate 2 corresponding to the input region E_{I} is a face where information may be input by an operation of a user using a finger F1. The operation face 2a of the substrate 2 may be provided with a protective film.

The substrate 2 is configured to be able to appropriately transmit light in a direction intersecting the operation face 2a and the back face 2b, and to have insulation properties. Examples of a constituent material of the substrate 2 include a material having translucency such as glass or plastic, and glass is preferably used in terms of visibility. It should be noted that translucency in this description implies having permeability with respect to visible light.

As illustrated in FIGS. 1 to 3, the first detecting electrodes 3a, the first connection electrodes 3b, the second detecting electrodes 4a, the second connection electrodes 4b, and an insulator 5 are provided on the back face 2b of the substrate 2 corresponding to the input region E_{I}.

The first detecting electrodes 3a detect an input position, in an X direction, of the finger F1 of the user close to the input region E_{I}, and have a function of generating a capacitance between the first detecting electrodes 3a and the finger F1. That is, the first detecting electrodes 3a are provided to have predetermined intervals along a Y direction on or above the back face 2b of the substrate 2.

The first connection electrodes 3b are members that electrically connect neighboring first detecting electrodes 3a with each other. The first connection electrodes 3b are provided on the back face 2b of the substrate 2.

The second detecting electrodes 4a detect an input position, in the Y direction, of the finger F1 of the user close to the input region E_{I}, and have a function of generating a capacitance between the second detecting electrodes 4a and the finger F1. That is, the second detecting electrodes 4a are provided to have predetermined intervals along the X direction on or above the back face 2b of the substrate 2.

The second connection electrodes 4b are members that electrically connect neighboring second detecting electrodes 4a with each other. The second connection electrodes 4b are provided on or above the insulator 5.
For this reason, the second connection electrodes 4b are electrically insulated from the first connection electrodes 3b. Herein, the insulator 5 is provided on or above the back face 2b of the substrate 2 to cover the first connection electrodes 3b. Examples of a constituent material of the insulator 5 include a resin such as an acrylic resin, an epoxy resin, or a silicon resin.

Examples of constituent materials of the first detecting electrodes 3a, the first connection electrodes 3b, the second detecting electrodes 4a, the second connection electrodes 4b include ITO (Indium Tin Oxide), IZO (Indium Zinc Oxide), ATO (Antimony Tin Oxide), AZO (Al-Doped Zinc Oxide), tin oxide, zinc oxide, or a conductive polymer.

In addition, a protective film 6 is provided on or above the back face 2b of the substrate 2 corresponding to the input region E_{I}. The protective film 6 is a member used to protect the first detecting electrodes 3a, the first connection electrodes 3b, the second detecting electrodes 4a, the second connection electrodes 4b, and the insulator 5. Examples of the protective film 6 include a polyester film, a polypropylene film, and a polyethylene film. Instead of the protective film 6, a member such as glass and plastic formed to have a thin thickness may be used.

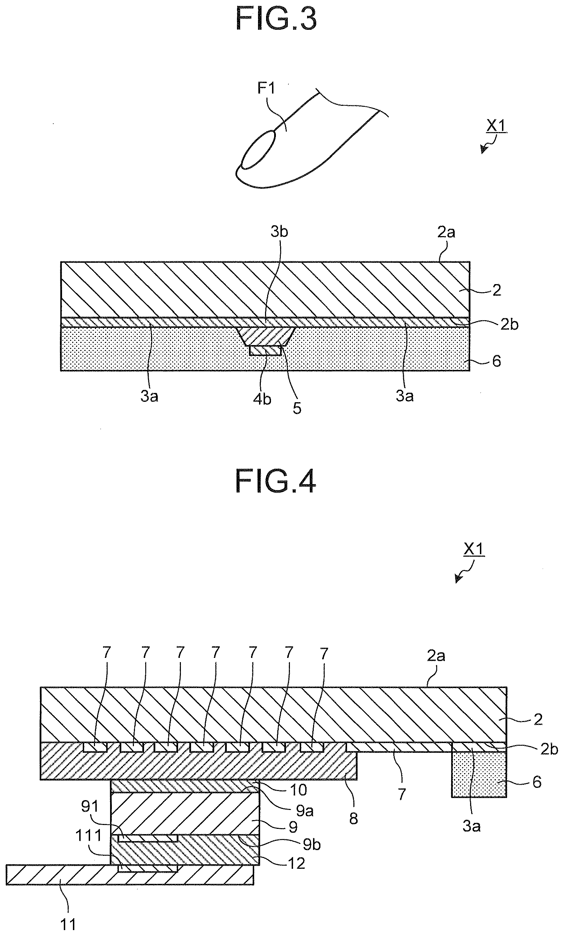

In addition, as illustrated in FIG. 1 and FIG. 4, the detecting electrode wiring 7, an insulating member 8, and an oscillating body 9 are provided on the back face 2b of the substrate 2 corresponding to the outer region E_{O}.

The detecting electrode wiring 7 is a member having a role of applying a voltage to the first detecting electrodes 3a and the second detecting electrodes 4a. One end of the detecting electrode wiring 7 is electrically connected to the first detecting electrodes 3a and the second detecting electrodes 4a, and another end thereof is positioned in an outer conduction region G1. A substrate is electrically connected to the outer conduction region G1. The detecting electrode wiring 7 is made from a metal thin film so as to be hard and high in shape stability.
Examples of the metal thin film include an aluminum film, an aluminum alloy film, a laminated film of a chrome film and an aluminum film, a laminated film of a chrome film and an aluminum alloy film, a silver film, a silver alloy film, or a gold alloy film. Examples of a method of forming the above-described metal thin film include a sputtering method, an evaporation method, or a chemical vapor deposition.

The insulating member 8 is a member used to protect the detecting electrode wiring 7. For this reason, the insulating member 8 is provided on or above the back face 2b of the substrate 2 to cover the detecting electrode wiring 7. In this embodiment, the insulating member 8 is provided over the entire outer region E_{O} to cover the detecting electrode wiring 7. Examples of the insulating member 8 include a resin such as an acrylic resin, an epoxy resin, or a silicon resin.

The oscillating body 9 is a member having a role of causing the substrate 2 to vibrate when a predetermined input operation by a user is detected. In this embodiment, the oscillating body 9 is provided on the insulating member 8 with an adhesive member 10 interposed therebetween. Examples of a constituent material of the adhesive member 10 include an acrylic adhesive material, a silicon adhesive material, a rubber adhesive material, or a urethane adhesive material. In this embodiment, description has been made on a case in which the oscillating body 9 is a piezoelectric element that vibrates based on an applied voltage. However, the oscillating body 9 is not limited thereto, and an electromagnetic oscillating body, a spring, a motor, and the like may be used.

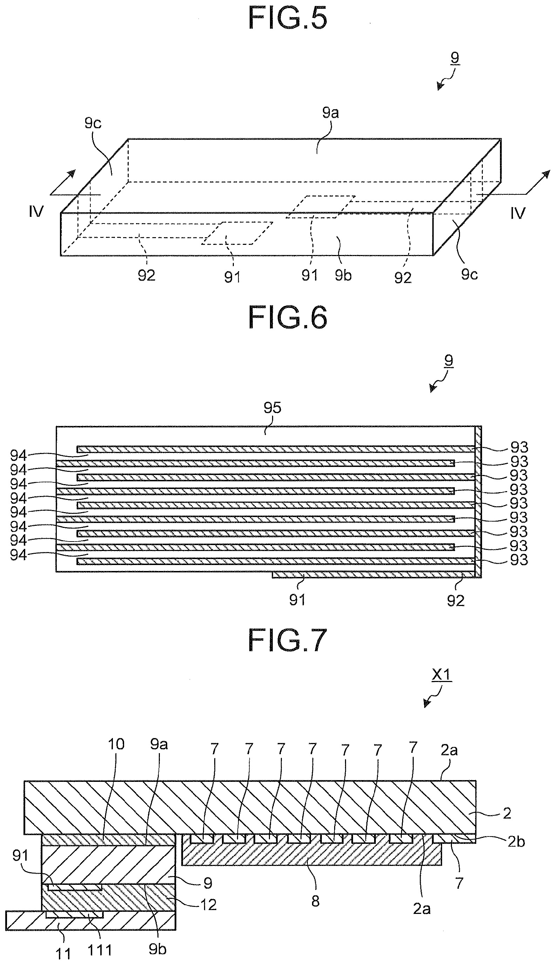

FIG. 5 is a perspective view illustrating an appearance of the oscillating body 9. As illustrated in FIG. 5, the oscillating body 9 includes a surface (opposing surface) 9a opposing the back face 2b of the substrate 2, a back face (opposing surface) 9b positioned opposite the surface 9a, and edge faces 9c positioned between the surface 9a and the back face 9b. That is, the surface 9a of the oscillating body 9 is a surface positioned on a side close to the detecting electrodes 3a and 4a. In addition, the back face 9b of the oscillating body 9 is a surface positioned on a side far from the detecting electrodes 3a and 4a. In addition, the back face 9b of the oscillating body 9 is provided with two first electrode terminals 91. One first electrode terminal 91 (one in the front in FIG. 5) is a member that applies a positive voltage, and another first electrode terminal 91 (one in the back in FIG. 5) is a member that applies a negative voltage. A reason for providing the first electrode terminals 91 on the back face 9b rather than the surface 9a of the oscillating body 9 will be described below. In addition, edge face electrodes 92 connected to the first electrode terminals 91 are provided in an area from the back face 9b to the edge faces 9c of the oscillating body 9. In this embodiment, two edge face electrodes 92 are provided to correspond to the two first electrode terminals 91.

FIG. 6 is a cross-sectional view taken along the cutting plane line IV-IV illustrated in FIG. 5. As illustrated in FIG. 6, the oscillating body 9 is provided with a plurality of internal electrodes 93 connected to the edge face electrodes 92, a plurality of active layers 94 positioned between the internal electrodes 93, and an inert layer 95 positioned on a side of the back face 2b of the substrate 2. The active layers 94 are made from a piezoelectric material undergoing a polarization treatment. Examples of the piezoelectric material include piezoelectric ceramics such as lead zirconate titanate.
The inert layer 95 is made from an insulating material, a metal material, and a piezoelectric material not undergoing a polarization treatment.

FIG. 1 illustrates an example in which two oscillating bodies 9 are disposed near long sides facing each other of the back face 2b of the substrate 2 and along the respective long sides. However, the arrangement is not limited thereto. For example, the two oscillating bodies 9 may be disposed near short sides facing each other of the back face 2b of the substrate 2 and along the respective short sides. In addition, the oscillating body 9 may be disposed on the operation face 2a of the substrate 2 rather than the back face 2b of the substrate 2. That is, a position, the number, and the like of the oscillating bodies 9 are not particularly limited.

In this embodiment, as illustrated in FIG. 4, a board 11 is provided to apply a voltage to the first electrode terminals 91, the edge face electrodes 92, and the internal electrodes 93 of the oscillating body 9. The board 11 is flexible, and for example, is a rigid substrate, a flexible substrate, a rigid flexible substrate, and the like. The board 11 is provided with a second electrode terminal 111. For example, the second electrode terminal 111 is formed on the board 11 by cutting off an insulating film provided on the board 11.

When the oscillating body 9 is positioned near the outer conduction region G1, a substrate electrically connected to the outer conduction region G1 and the board 11 electrically connected to the oscillating body 9 may be made from the same physical substrate. In this way, when a common substrate is used, the number of components may be reduced.

The first electrode terminals 91 provided on the back face 9b of the oscillating body 9 and the second electrode terminal 111 provided on the board 11 are electrically connected to each other through a conductive adhesive 12. The conductive adhesive 12 is a mixture of a resin used for fixing and metal used for conduction, and is a member having both a property of conducting electricity and a property of fixing materials with each other. Instead of the conductive adhesive 12, a conducting member such as a solder may be used. Since the first electrode terminals 91 of the oscillating body 9 and the second electrode terminal 111 of the board 11 are electrically connected to each other through the conductive adhesive 12, it is possible to apply a voltage to the active layers 94 of the oscillating body 9 through the second electrode terminal 111 of the board 11, and the first electrode terminals 91, the edge face electrodes 92, and the internal electrodes 93 of the oscillating body 9. When a voltage is applied to the active layers 94 of the oscillating body 9, the oscillating body 9 vibrates.

In addition, in this embodiment, since the board 11 is flexible, a certain degree of deformation is allowed. For this reason, even when the first electrode terminals 91 of the oscillating body 9 and the second electrode terminal 111 of the board 11 are electrically connected to each other through the conductive adhesive 12, it is possible to reduce a possibility that vibration of the oscillating body 9 decreases, and it is possible to propagate vibration to the substrate 2.

As described in the foregoing, in the input device X1, the back face 9b of the oscillating body 9 is provided with the first electrode terminals 91. In addition, the first electrode terminals 91 of the oscillating body 9 and the second electrode terminal 111 of the board 11 are electrically connected to each other through the conductive adhesive 12. As a result, it is possible to apply a voltage to the oscillating body 9 through the second electrode terminal 111 of the board 11 and the first electrode terminals 91 of the oscillating body 9.

Herein, a case in which a first electrode terminal is provided on a surface of an oscillating body as opposed to the input device X1 is presumed. In this case, a distance between the first electrode terminal and a detecting electrode and a distance between the first electrode terminal and a detecting electrode wiring decrease when compared to the input device X1. For this reason, in the input device, a detection sensitivity of an input position may decrease due to a stray capacitance generated between the first electrode terminal and the detecting electrode and between the first electrode terminal and the detecting electrode wiring. On the other hand, in the input device X1, the first electrode terminals 91 is provided on the back face 9b of the oscillating body 9, and a voltage is applied to the oscillating body 9 through the second electrode terminal 111 of the board 11 and the first electrode terminals 91 of the oscillating body 9. For this reason, in the input device X1, a distance between the first electrode terminals 91 and the detecting electrodes 3a and 4a and a distance between the first electrode terminals 91 and the detecting electrode wiring 7 increase. Therefore, a stray capacitance generated between the first electrode terminals 91 and the detecting electrodes 3a and 4a and between the first electrode terminals 91 and the detecting electrode wiring 7 may be reduced. As a result, in the input device X1, it is possible to reduce a possibility that a detection sensitivity of the input position decreases even when the oscillating body 9 is attached to the substrate 2.

In the above description, an example in which the oscillating body 9 is provided on the insulating member 8 with the adhesive member 10 interposed therebetween has been described. However, the oscillating body 9 is not limited thereto. For example, as illustrated in FIG. 7, the oscillating body 9 may be directly provided on the back face 2b of the substrate 2 corresponding to the outer region Eₒ rather than on the insulating member 8. However, in this configuration, the oscillating body 9 is attached to the substrate 2, and thus the outer region Eₒ increases. That is, the size of the input device X1 increases in the horizontal direction. For this reason, from a viewpoint of miniaturizing the input device X1, it is preferable that the oscillating body 9 be provided on the insulating member 8 with the adhesive member 10 interposed therebetween as in this embodiment.

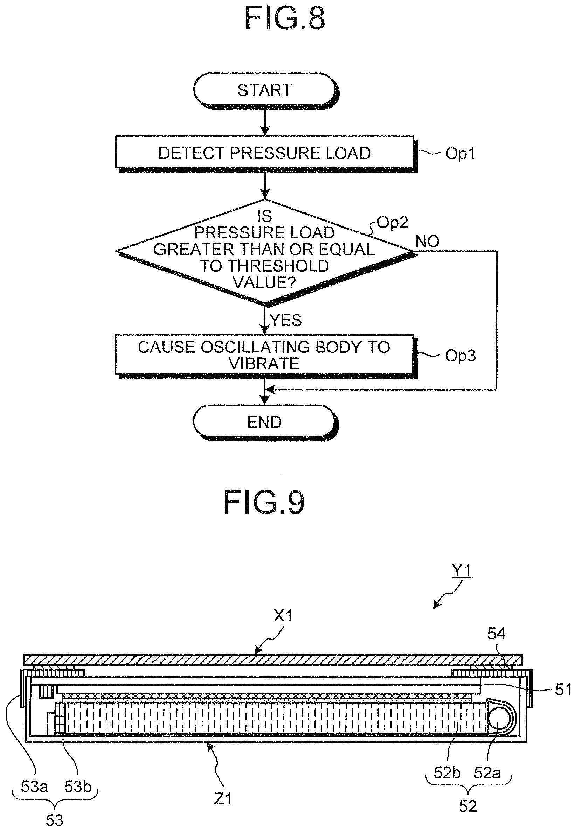

Next, an operation of the above-described input device X1 will be described with reference to FIG. 8.

Hereinafter, an operation example of the input device X1 corresponding to a case in which a sense of pressing is transmitted to a user as a transmission of touch sensation will be described. However, the input device X1 may be applied to a case of transmitting various senses of touch such as a sense of tracing and a tactile sense in addition to the sense of pressing.

As illustrated in FIG. 8, when a user presses the operation face 2a of the substrate 2 corresponding to the input region E_{I}, the oscillating body 9 detects a pressure load applied to the substrate 2 (Op1). Herein, a load detecting function of the oscillating body 9 will be described. That is, when a user presses the operation face 2a of the substrate 2 corresponding to the input region E_{I}, the substrate 2 warps. The oscillating body 9 warps with the substrate 2 warping. That is, an amount of warping of the oscillating body 9 changes in response to a pressure load applied to the substrate 2. In this embodiment, the oscillating body 9 is a piezoelectric element, and thus may be converted to a voltage according to an amount of warping. As a result, a pressure load of the substrate 2 may be detected by the oscillating body 9. In the above description, an example of implementing the load detecting function using the oscillating body 9 has been described. However, the load detecting function is not limited thereto. For example, the load detecting function may be implemented by a load sensor such as a strain sensor.

Then, when an operation of pressing the operation face 2a of the substrate 2 by a user is an operation of pressing an input object displayed on a display screen, a touch transmission driver (not illustrated) determines whether the pressure load detected in Op1 is greater than or equal to a threshold value (Op2). Herein, the position of the touch transmission driver is not particularly limited as long as the touch transmission driver is electrically connected to the board 11.

Then, when the pressure load detected in Op1 is greater than or equal to the threshold value (YES in Op2), the touch transmission driver causes the oscillating body 9 to vibrate (Op3). Then, the substrate 2 vibrates due to the oscillating body 9 that is caused to vibrate in Op3.
As a result, a sense of pressing is transmitted to a user that presses the substrate 2. On the other hand, when the pressure load detected in Op1 is determined to be less than the threshold value (NO in Op2), the touch transmission driver terminates the process of FIG. 8.

From the above, the above-described input device X1 may reduce a possibility that a detection sensitivity of an input position decreases.

Next, a display device Y1 including the input device X1 will be described with reference to FIG. 9.

As illustrated in FIG. 9, the display device Y1 according to this embodiment includes the input device X1 and a liquid crystal display device Z1 that is disposed to oppose the input device X1.

The liquid crystal display device Z1 includes a liquid crystal display panel 51, a backlight 52, and a display casing 53.

The liquid crystal display panel 51 is a display panel that uses a liquid crystal composition for display. Instead of the liquid crystal display panel 51, a display panel such as a plasma display, an organic EL display, and an electronic paper may be used. The backlight 52 includes a light source 52a and a light guide plate 52b. The light source 52a is a member used to emit light to the light guide plate 52b, and is made from an LED (Light Emitting Diode). Instead of the LED, a cold cathode fluorescent lamp, a halogen lamp, a xenon lamp, and an EL (ElectroLuminescence) may be used. The light guide plate 52b is a member used to substantially uniformly guide light emitted from the light source 52a to the entire lower surface of the liquid crystal display panel 51.

The display casing 53 is used to accommodate the liquid crystal display panel 51 and the backlight 52, and includes an upper casing 53a and a lower casing 53b. Examples of a constituent material of the display casing 53 include a resin such as polycarbonate, or metal such as stainless steel and aluminum.

Herein, the input device X1 is supported to the display casing 53 by a supporting portion 54. That is, the supporting portion 54 is a member used to vibratably support the input device X1 to the display casing 53. For this reason, the input device X1 and the liquid crystal display panel 51 are disposed to face each other with a space therebetween. Examples of a constituent material of the supporting portion 54 include silicone rubber, urethane rubber, urethane foam, another type of rubber, or plastic.

Since the display device Y1 includes the input device X1, a sense of touch may be transmitted to a user, and a possibility that a detection sensitivity of an input position decreases may be reduced.

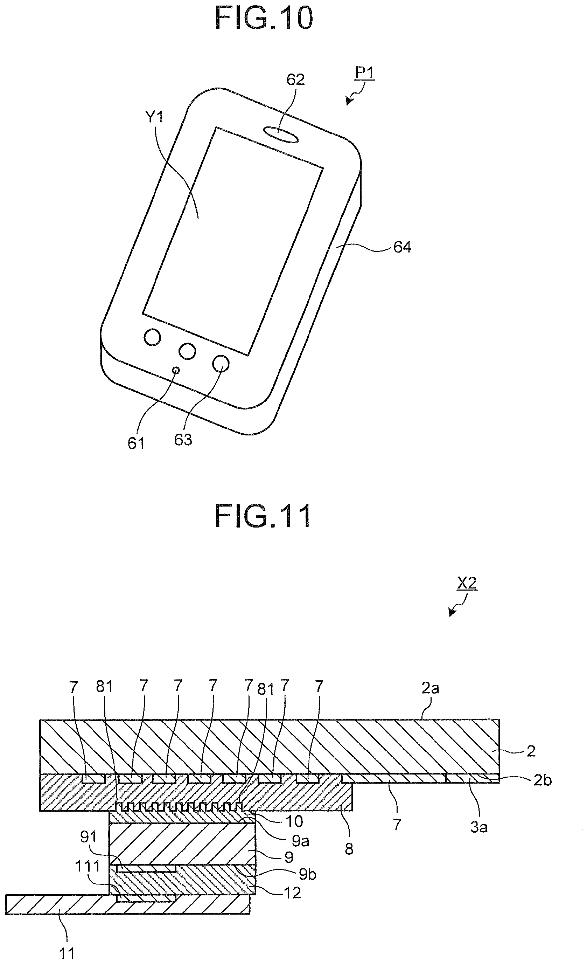

Next, a mobile terminal P1 including the display device Y1 will be described with reference to FIG. 10.

As illustrated in FIG. 10, the mobile terminal P1 is, for example, a device such as a mobile phone, a smart phone, and a PDA, and includes the display device Y1, a sound input unit 61, a sound output unit 62, a key input unit 63, and a device casing 64.

For example, the sound input unit 61 is configured as a mike and the like, and receives a voice of a user and the like. The sound output unit 62 is configured as a speaker and the like, and a voice of another caller and the like is output therefrom. For example, the key input unit 63 is configured as a mechanical key. The key input unit 63 may be an operation key displayed on a display screen. The device casing 64 is a member used to accommodate the display device Y1, the sound input unit 61, the sound output unit 62, and the key input unit 63.

In addition, the mobile terminal P1 may include a digital camera functional unit, a tuner for one segment broadcast, a short distance wireless communication unit such as an infrared communication functional unit, and various interfaces in response to a necessary function. However, details thereof will be neither illustrated nor described.

Since the mobile terminal P1 includes the display device Y1, a sense of touch may be transmitted to a user, and a possibility that a detection sensitivity of an input position decreases may be reduced.

In the above description, an example in which the mobile terminal P1 includes the sound input unit 61 has been described. However, the mobile terminal P1 is not limited thereto. That is, the mobile terminal P1 may not have the sound input unit 61.

Herein, instead of the above-described mobile terminal P1, the display device Y1 may be included in various devices such as a programmable display used for industry, an electronic notebook, a personal computer, a copier, a terminal device for game, a television, and a digital camera.

The above-described embodiment illustrates a specific example of the embodiment of the invention, and may be modified in various ways. Hereinafter, several substantial modifications will be described.

### [Modification 1]

FIG. 11 is a cross-sectional view illustrating a schematic configuration of an input device X2 according to Modification 1. FIG. 11 is a cross-sectional view illustrating the same portion as that of FIG. 4. In FIG. 11, an element having a similar function to that of FIG. 4 will be denoted by the same reference numeral, and a detailed description thereof will not be provided.

In the input device X2, the insulating member 8 is provided with a plurality of recesses 81 on a surface including the adhesive member 10. In addition, the plurality of recesses 81 is filled with the adhesive member 10. Since the plurality of recesses 81 is filled with the adhesive member 10, an area in which the insulating member 8 comes into contact with the adhesive member 10 increases. Since area in which the insulating member 8 comes into contact with the adhesive member 10 increases, an adhesive strength of the oscillating body 9 with respect to the insulating member 8 may be enhanced. For this reason, even when the oscillating body 9 vibrates, a possibility that the oscillating body 9 peels off the insulating member 8 may be reduced. As a result, in the input device X2, a possibility that a detection sensitivity of an input position decreases may be reduced, and reliability may be enhanced.

### [Modification 2]

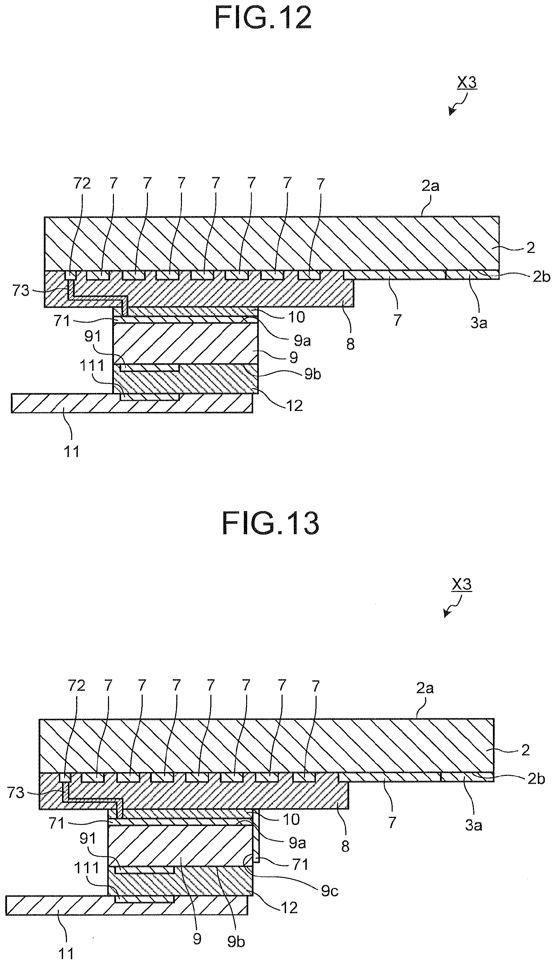

FIG. 12 is a cross-sectional view illustrating a schematic configuration of an input device X3 according to Modification 2. FIG. 12 is a cross-sectional view illustrating the same portion as that of FIG. 4. In FIG. 12, an element having a similar function to that of FIG. 4 will be denoted by the same reference numeral, and a detailed description thereof will not be provided.

The input device X3 includes a conductive film 71 on the surface 9a of the oscillating body 9. In addition, the conductive film 71 is electrically connected to a ground terminal 72 provided on the back face 2b of the substrate 2 via a wiring conductor 73. The wiring conductor 73 is buried in the insulating member 8. For this reason, the conductive film 71 is set to a ground potential (0V). Thus, an electric field of the oscillating body 9 may be shielded by the conductive film 71, and influence of an electric field generated from the oscillating body 9 on the detecting electrodes 3a and 4a, and the detecting electrode wiring 7 may be reduced. Examples of a constituent material of the conductive film 71 and the wiring conductor 73 include a metallic material such as silver, copper, gold, palladium, tungsten, molybdenum, or manganese.

As described in the foregoing, since the conductive film 71 is provided on the surface 9a of the oscillating body 9, a stray capacitance between the oscillating body 9 and the detecting electrode wiring 7, and between the oscillating body 9 and the detecting electrodes 3a and 4a may be further reduced. For this reason, even when the oscillating body 9 is attached to the substrate 2, the input device X3 may further reduce a possibility that a detection sensitivity of an input position decreases when compares to the input devices X1 and X2.

In the above description, an example in which the conductive film 71 is set to a ground potential has been described. However, the potential is not limited thereto. The conductive film 71 may be set to a reference potential other than the ground potential as long as an electric field from the oscillating body 9 can be shielded by the conductive film 71.

In addition, as illustrated in FIG. 13, the conductive film 71 may be further provided on the edge face 9c of the oscillating body 9 positioned on a side of the detecting electrodes 3a and 4a. In particular, the conductive film 71 may be further provided on the edge face 9c of the oscillating body 9 positioned on a side of the detecting electrodes 3a and 4a so as to cover the edge face electrode 92 provided on the edge face 9c of the oscillating body 9. As such, a stray capacitance between the edge face electrode 92 of the oscillating body 9 and the detecting electrode wiring 7, and between the edge face electrode 92 of the oscillating body 9 and the detecting electrodes 3a and 4a may be further reduced.

Instead of or in addition to providing the conductive film 71 on the surface 9a and the edge face 9c of the oscillating body 9, the adhesive member 10 may include a conductive material. In this way, a stray capacitance between the oscillating body 9 and the detecting electrode wiring 7, and between the oscillating body 9 and the detecting electrodes 3a and 4a may be further reduced.

### [Modification 3]

In the above description, an example in which an input device is a capacitance-type touch panel has been described. However, the input device is not limited thereto. That is, a resistive type touch panel, a surface elastic wave type touch panel, an infrared type touch panel, or an electromagnetic induction type touch panel may be used when a possibility that a detection sensitivity of an input position decreases may be reduced.

### [Modification 4]

In addition, an example of the display device Y1 including the input device X1 has been described. However, instead of the input device X1, the input device X2 or X3 may be employed. Further, a device including a display device that employs the input device X2 or X3 in a device casing may be employed.

In addition, the above-described embodiment and modified examples may be appropriately combined.

### REFERENCE SIGNS LIST

X1 to X3 INPUT DEVICE
Y1 DISPLAY DEVICE
P1 MOBILE TERMINAL (MACHINE)
2 SUBSTRATE
3a FIRST DETECTING ELECTRODE (DETECTING ELECTRODE)
4a SECOND DETECTING ELECTRODE (DETECTING ELECTRODE)
7 DETECTING ELECTRODE WIRING
8 INSULATING MEMBER
81 RECESS OF INSULATING MEMBER
9 OSCILLATING BODY
9a SURFACE OF OSCILLATING BODY (OPPOSING SURFACE OF OSCILLATING BODY)
9b BACK FACE OF OSCILLATING BODY (OPPOSING SURFACE OF OSCILLATING BODY)
9c EDGE FACE OF OSCILLATING BODY
91 FIRST ELECTRODE TERMINAL
10 ADHESIVE MEMBER
11 SUBSTRATE
111 SECOND ELECTRODE TERMINAL
12 CONDUCTIVE ADHESIVE (CONDUCTING MEMBER)
51 LIQUID CRYSTAL DISPLAY PANEL (DISPLAY PANEL)
64 DEVICE CASING
71 CONDUCTIVE FILM

## Claims

1. An input device (X1; X2; X3) comprising:
a substrate (2) that includes an operation face (2a) and a back face (2b) positioned opposite the operation face (2a) ;
first detecting electrodes (3a) provided to have predetermined intervals in a first direction (Y) on the back face (2b) of the substrate (2) in an input region (E_{I});
second detecting electrodes (4a) provided to have predetermined intervals in a second direction (X) orthogonal to the first direction (Y) on the back face (2b) of the substrate (2) in the input region (E_{I});
a detecting electrode wiring (7) that is provided on the back face (2b) of the substrate (2) in an outer region (E_{O}) outside of the input region (E_{I}) and electrically connected to the first detecting electrodes (3a) and the second detecting electrodes (4a);
an insulating member (8) that is provided on or above the back face (2b) of the substrate (2) in the outer region (E_{O}) to cover the detecting electrode wiring (7); and
an oscillating body (9) which causes the substrate (2) to vibrate, the oscillating body (9) being provided on the back face (2b) of the substrate (2) on or above the insulating member (8) in the outer region (E_{O}),
wherein the oscillating body (9) includes a first electrode terminal (91) for electrically connecting the oscillating body (9) with a board (11), the first electrode terminal (91) being provided on the one of opposing surfaces (9b) of the oscillating body (9) which opposes the back face (2b) of the substrate (2), the one of opposing surfaces (9b) being farther than the other (9a) from the first detecting electrodes (3a), the second detecting electrodes (4a) and the detecting electrode wiring (7),
wherein the board (11) is provided with a second electrode terminal (111), and
wherein the first electrode terminal (91) of the oscillating body (9) and the second electrode terminal (111) of the board (11) are electrically connected to each other via a conducting member (12).

2. The input device (X1; X2; X3) according to claim 1,
wherein the oscillating body (9) is provided on the insulating member (8) with an adhesive member (10) interposed therebetween.

3. The input device (X2) according to claim 2, wherein the insulating member (8) includes a plurality of recesses (81) filled with the adhesive member (10).

4. The input device (X1; X2; X3) according to claim 2 or 3, wherein the adhesive member includes a conductive material.

5. The input device (X3) according to any one of claims 1 to 4, wherein a conductive film (71) is provided on one of the opposing surfaces (9a) of the oscillating body (9) positioned on a side close to the detecting electrodes (3a, 4a) .

6. The input device (X3) according to claim 5,
wherein the oscillating body (9) includes an edge face (9c) between the opposing surfaces (9a, 9b) of the oscillating body (9), and the conductive film (71) is further provided on the edge face (9c) of the oscillating body (9) positioned on a side of the detecting electrodes (3a, 4a).

7. The input device (X1; X2; X3) according to any one of claims 1 to 6, wherein the oscillating body (9) is a piezoelectric element that vibrates based on an applied voltage.

8. A display device (Y1) comprising:
the input device (X1; X2 ; X3) according to any one of claims 1 to 7; and
a display panel (51) disposed to face the input device (X1; X2; X3).

9. A machine (P1) comprising the display device (Y1) according to claim 8 in a device casing (64).

## Patentansprüche

1. Eine Eingabevorrichtung (X1, X2, X3), aufweisend:
ein Substrat (2), das eine Bedienseite (2a) und eine Rückseite (2b) aufweist, die entgegengesetzt zu der Bedienseite (2a) positioniert ist,
erste Detektionselektroden (3a), die vorgesehen sind, um in einer ersten Richtung (Y) auf der Rückseite (2b) des Substrats (2) in einem Eingabebereich (E_{I}) vorbestimmte Abstände zu haben,
zweite Detektionselektroden (4a), die vorgesehen sind, um in einer zweiten Richtung (X) orthogonal zu der ersten Richtung (Y) auf der Rückseite (2b) des Substrats (2) im Eingabebereich (E_{I}) vorbestimmte Abstände zu haben,
eine Detektionselektrodenverdrahtung (7), die auf der Rückseite (2b) des Substrats (2) in einem äußeren Bereich (E_{O}) außerhalb des Eingabebereichs (E_{I}) vorgesehen ist und elektrisch mit den ersten Detektionselektroden (3a) und den zweiten Detektionselektroden (4a) verbunden ist,
ein Isolierelement (8), das auf oder über der Rückseite (2b) des Substrats (2) in dem äußeren Bereich (E_{O}) vorgesehen ist, um die Detektionselektrodenverdrahtung (7) zu bedecken, und
einen Schwingkörper (9), der ein Schwingen des Substrats (2) bewirkt, wobei der Schwingkörper (9) auf der Rückseite (2b) des Substrats (2) auf oder über dem Isolierelement (8) im äußeren Bereich (E_{O}) vorgesehen ist,
wobei der Schwingkörper (9) einen ersten Elektrodenanschluss (91) zum elektrischen Verbinden des Schwingkörpers (9) mit einer Platte (11) aufweist, wobei der erste Elektrodenanschluss (91) auf der einen von entgegengesetzten Flächen (9b) des Schwingkörpers (9) vorgesehen ist, die der Rückseite (2b) des Substrats (2) entgegengesetzt ist, wobei die eine von entgegengesetzten Flächen (9b) von den ersten Detektionselektroden (3a), den zweiten Detektionselektroden (4a) und der Detektionselektrodenverdrahtung (7) weiter entfernt als die andere (9a) ist,
wobei die Platte (11) mit einem zweiten Elektrodenanschluss (111) versehen ist, und
wobei der erste Elektrodenanschluss (91) des Schwingkörpers (9) und der zweite Elektrodenanschluss (111) der Platte (11) über ein leitendes Element (12) elektrisch miteinander verbunden sind.

2. Die Eingabevorrichtung (X1, X2, X3) gemäß Anspruch 1,
wobei der Schwingkörper (9) auf dem Isolierelement (8) mit einem Haftelement (10) versehen ist, das dazwischen angeordnet ist.

3. Die Eingabevorrichtung (X2) gemäß Anspruch 2, wobei das Isolierelement (8) eine Mehrzahl von Aussparungen (81) aufweist, die mit dem Haftelement (10) gefüllt sind.

4. Die Eingabevorrichtung (X1, X2, X3) gemäß Anspruch 2 oder 3, wobei das Haftelement ein leitfähiges Material enthält.

5. Die Eingabevorrichtung (X3) gemäß irgendeinem der Ansprüche 1 bis 4, wobei ein leitfähiger Film (71) auf einer der entgegengesetzten Flächen (9a) des Schwingkörpers (9) vorgesehen ist, die auf einer Seite nahe bei den Detektionselektroden (3a, 4a) positioniert ist.

6. Die Eingabevorrichtung (X3) gemäß Anspruch 5,
wobei der Schwingkörper (9) eine Randseite (9c) zwischen den entgegengesetzten Flächen (9a, 9b) des Schwingkörpers (9) aufweist, und der leitfähige Film (71) ferner auf der Randseite (9c) des Schwingkörpers (9) vorgesehen ist, die auf einer Seite der Detektionselektroden (3a, 4a) positioniert ist.

7. Die Eingabevorrichtung (X1, X2, X3) gemäß irgendeinem der Ansprüche 1 bis 6, wobei der Schwingkörper (9) ein piezoelektrisches Element ist, das basierend auf einer angelegten Spannung schwingt.

8. Eine Anzeigevorrichtung (Y1), aufweisend:
die Eingabevorrichtung (X1, X2, X3) gemäß irgendeinem der Ansprüche 1 bis 7 und
ein Anzeigepaneel (51), das angeordnet ist, um der Eingabevorrichtung (X1, X2, X3) zugewandt zu sein.

9. Ein Gerät (P1), aufweisend die Anzeigevorrichtung (Y1) gemäß Anspruch 8 in einem Vorrichtungsgehäuse (64).

## Revendications

1. Un dispositif de saisie (X1, X2, X3), comportant :
un substrat (2) qui comprend une face d'actionnement (2a) et une face arrière (2b) située opposée à la face d'actionnement (2a),
des premières électrodes de détection (3a) prévues de manière à être à intervalles prédéterminés dans une première direction (Y) sur la face arrière (2b) du substrat (2) dans une région de saisie (E_{I}) ,
des deuxièmes électrodes de détection (4a) prévues de manière à être à intervalles prédéterminés dans une deuxième direction (X) orthogonale à la première direction (Y) sur la face arrière (2b) du substrat (2) dans la région de saisie (E_{I}) ,
un câblage d'électrode de détection (7) qui est prévu sur la face arrière (2b) du substrat (2) dans une région extérieure (E_{O}) à l'extérieur de la région de saisie (E_{I}) et relié électriquement aux premières électrodes de détection (3a) et aux deuxièmes électrodes de détection (4a),
un élément isolant (8) qui est prévu sur ou au-dessus de la face arrière (2b) du substrat (2) dans la région extérieure (E_{O}) pour recouvrir la câblage d'électrode de détection (7), et
un corps oscillant (9) qui provoque une vibration du substrat (2), le corps oscillant (9) étant prévu sur la face arrière (2b) du substrat (2) sur ou au-dessus de l'élément isolant (8) dans la région extérieure (E_{O}),
dans lequel le corps oscillant (9) comprend une première borne d'électrode (91) pour relier électriquement le corps oscillant (9) à une plaque (11), la première borne d'électrode (91) étant prévue sur l'une de surfaces opposées (9b) du corps oscillant (9) qui est opposée à la face arrière (2b) du substrat (2), ladite une de surfaces opposées (9b) étant plus loin que l'autre (9a) des premières électrodes de détection (3a), des deuxièmes électrodes de détection (4a) et du câblage d'électrode de détection (7),
dans lequel la plaque (11) est pourvue d'une deuxième borne d'électrode (111), et
dans lequel la première borne d'électrode (91) du corps oscillant (9) et la deuxième borne d'électrode (111) de la plaque (11) sont reliées électriquement l'une à l'autre moyennant un élément conducteur (12).

2. Le dispositif de saisie (X1, X2, X3) selon la revendication 1,
dans lequel le corps oscillant (9) est pourvu sur l'élément isolant (8) d'un élément adhésif (10) interposé entre ceux-ci.

3. Le dispositif de saisie (X2) selon la revendication 2, dans lequel l'élément isolant (8) comprend une pluralité d'évidements (81) remplis de l'élément adhésif (10).

4. Le dispositif de saisie (X1, X2, X3) selon la revendication 2 ou 3, dans lequel l'élément adhésif comprend un matériau conducteur.

5. Le dispositif de saisie (X3) selon l'une quelconque des revendications 1 à 4, dans lequel un film conducteur (71) est prévu sur une des surfaces opposées (9a) du corps oscillant (9) positionnée sur un côté proche des électrodes de détection (3a, 4a).

6. Le dispositif de saisie (X3) selon la revendication 5,
dans lequel le corps oscillant (9) comprend une face de bord (9c) entre les surfaces opposées (9a, 9b) du corps oscillant (9), et le film conducteur (71) est en outre prévu sur la face de bord (9c) du corps oscillant (9) positionnée sur un côté des électrodes de détection (3a, 4a).

7. Le dispositif de saisie (X1, X2, X3) selon l'une quelconque des revendications 1 à 6, dans lequel le corps oscillant (9) est un élément piézoélectrique qui vibre basé sur une tension appliquée.

8. Un dispositif d'affichage (Y1), comportant :
le dispositif de saisie (X1, X2, X3) selon l'une quelconque des revendications 1 à 7, et
un panneau d'affichage (51) disposé de manière à faire face au dispositif de saisie (X1, X2, X3).

9. Une machine (P1) comportant le dispositif d'affichage (Y1) selon la revendication 8 dans un boîtier de dispositif (64) .
